# EUROPÄISCHE PATENTSCHRIFT

(11) **EP 1 431 928 B1**
(45) Veröffentlichungstag und Bekanntmachung des Hinweises auf die Patenterteilung: **07.11.2007**
(21) Anmeldenummer: 03028992.0
(22) Anmeldetag: 17.12.2003
(51) Int. Cl.: G07C 9/00, B60R 25/00

(54) **Zugangskontrolleinrichtung umfassend eine zugangsseitige Steuereinrichtung und eine benutzerseitige tragbare Identifikationseinrichtung mit Transceivern zur bidirektionalen Kommunikation**
Access control installation including an access side's control device and a user identification device having transceivers for bi-directional communication
Installation d'accès controlé comprennant un organe de commande côté accès et un organe d'identification côté utilisateur comportant des émetteurs-récepteurs communicant bidirectionnellement

(30) Priorität: 18.12.2002 DE 10259305
(43) Veröffentlichungstag der Anmeldung: 23.06.2004
(73) Patentinhaber: Delphi Technologies, Inc., Troy, MI 48007 (US)
(72) Erfinder: Suck, Jochen, 51674 Wiehl (DE)
(74) Vertreter: Manitz, Finsterwald & Partner GbR

(56) Entgegenhaltungen:
- EP-A- 1 132 999
- EP-A- 1 167 926
- DE-A1- 19 729 403
- DE-C1- 10 059 179
- DE-C1- 19 718 764
- FR-A- 2 808 125

## Beschreibung

Die Erfindung betrifft eine Zugangskontrolleinrichtung insbesondere für Fahrzeuge, mit einer zugangsseitigen Steuereinrichtung, einer benutzerseitigen tragbaren Identifikationseinrichtung, einem der Steuereinrichtung zugeordneten ersten Tranceiver für eine bidirektionale drahtlose Kommunikation mit einem der Identifikationseinrichtung zugeordneten zweiten Transceiver, einer Sendeantenne für einen auf der Fahrerseite eines betreffenden Fahrzeugs liegenden Überwachungsbereich, einer Sendeantenne für einen auf der Beifahrerseite liegenden Überwachungsbereich und einer Sendeantenne für einen im Bereich des Kofferraumes liegenden Überwachungsbereich, wobei der erste Transceiver zumindest eine Sendeantenne aufweist, die eine ein Magnetfeld erzeugende elektrische Leiterschleife umfasst. Beispeilsweise in der DE 197 18 764 C1 ist eine Zugangskontrolleinrichtung dieser Art beschrieben.

Eine solche Zugangskontrolleinrichtung kann insbesondere in Verbindung mit einem schlüssellosen Zugangssystem (keyless entry) oder einem schlüssellosen Startsystem (keyless start system) vorzugsweise für Fahrzeuge, insbesondere Kraftfahrzeuge vorgesehen sein. Es ist also u.a. in Verbindung mit Schließeinrichtungen und/oder dergleichen von Fahrzeugen einsetzbar.

Bei der Identifikationseinrichtung kann es sich beispielsweise um einen zum Beispiel in einen Fahrzeugschlüssel, einer Chipkarte oder dergleichen integrierten Transponder handeln. Ein solcher Transponder weist keine eigene Energieversorgung auf, er wird vielmehr bei der Annäherung an die Steuereinrichtung drahtlos mit Energie versorgt und im weiteren automatisch zur Übertragung der betreffenden Autorisierungssignale angesprochen.

Bekannte Zugangskontrolleinrichtungen basieren auf verschiedenen Ferritkern-Antennen, die zum Beispiel in Türen, im Innenraum und im Kofferraumbereich eines jeweiligen Fahrzeugs vorgesehen sind, um die Identifikationseinrichtung entsprechend zu orten. Ferritkern-Antennen sind nun aber relativ kostspielig.

Der Erfindung liegt die Aufgabe zugrunde, eine verbesserte Zugangskontrolleinrichtung der eingangs genannten Art zu schaffen, die unter Aufrechterhaltung eines zuverlässigen Betriebs einen einfacheren und entsprechend kostengünstigeren Aufbau besitzt.

Diese Aufgabe wird nach der Erfindung dadurch gelöst, dass Schaltmittel vorgesehen sind, über die zumindest die Leiterschleifen der Sendeantenne für den auf der Fahrerseite liegenden Überwachungsbereich und der Sendeantenne für den auf der Beifahrerseite liegenden Überwachungsbereich wahlweise miteinander kombinierbar sind. Bevorzugt ist die Leiterschleife zumindest einer Sendeantenne des ersten Transceivers zumindest im Wesentlichen geschlossen.

Mit einer solchen Leiterschleife ist es auf einfache, kostengünstige und zuverlässige Weise möglich, festzustellen, ob sich die Identifikationseinrichtung innerhalb oder außerhalb eines jeweiligen Überwachungsbereichs befindet. So kann beispielsweise sichergestellt werden, dass eine betreffende Funktion nur dann zugelassen und ausgeführt wird, wenn die Identifikationseinrichtung innerhalb eines betreffenden Überwachungsbereichs bzw. außerhalb oder innerhalb eines bestimmten Fahrzeugbereichs identifiziert wurde.

Bei der aus der DE 197 18 764 C1 bekannten Zugangskontrolleinrichtung werden die Leiterschleifen der verschiedenen Sendeantennen getrennt angesteuert.

Vorteilhafterweise umfasst zumindest eine Sendeantenne nur der ersten Transceivers eine einzige Leiterschleife.

Der definierte Überwachungsbereich zumindest einer Sendeantenne des ersten Transceivers kann zumindest teilweise insbesondere durch die Größe und den örtlichen Verlauf der Leiterschleife der betreffenden Sendeantenne, die Ausrichtung des durch die Leiterschleife erzeugten Magnetfeldes, die Reichweite der Sendeantenne, die Eingangsempfindlich-keit des Empfangsteils des ersten Transceivers und/oder die Richtung des in der Leiterschleife fließenden Stromes definiert sein. Mit einer Umschaltung des in der Leiterschleife fließenden Stromes von der einen in die jeweils andere Richtung kann z.B. von einer Außenraumüberwachung zu einer Innenraumüberwachung umgeschaltet werden.

Bevorzugt ist zumindest eine Sendeantenne des ersten Transceivers mit einer vorgebbaren definierten Sendeleistung betreibbar. Dabei kann die Sendeleistung insbesondere variabel einstellbar sein.

Alternativ oder zusätzlich kann der Empfangsteil des ersten Transceivers mit einer vorgebbaren definierten Eingangsempfindlichkeit betreibbar sein. Dabei ist diese Eingansempfindlichkeit vorzugsweise variabel einstellbar.

Die Reichweite einer jeweiligen Sendeantenne ist beispielsweise über deren Sendeleistung vorgebbar. Grundsätzlich kann eine entsprechende Einstellung der Reichweite beispielsweise auch über den Antennenstrom erfolgen.

Während erfindungsgemäß mehrere Sendeantennen für unterschiedliche vorgebbare definierte Überwachungsbereiche vorgesehen sind, kann der Transceiver zudem auch mehrere zumindest teilweise getrennt ansteuerbare Sendeantennen umfassen. Von Vorteil ist auch, wenn jede Sendeantenne des ersten Transceivers jeweils über einen vorzugsweise der Steuereinrichtung zugeordneten Treiber ansteuerbar ist. Dabei kann insbesondere für jede Sendeantenne ein eigener Treiber vorgesehen sein.

Bei einer bevorzugten praktischen Ausführungsform der erfindungsgemäßen Zugangskontrolleinrichtung ist über die Schaltmittel auch die Richtung des Schleifenstroms umschaltbar ist. Dabei können die Leiterschleifen der betreffenden Sendeantennen über die Schaltmittel insbesondere in Reihe schaltbar sein.

Bevorzugt sind die Leiterschleifen von zumindest zwei Sendeantennen wahlweise miteinander kombinierbar, um den dadurch insgesamt abgedeckten Bereich mittels des ersten Transceivers und der Steuereinrichtung daraufhin zu überwachen, ob sich die Identifikationseinrichtung innerhalb oder außerhalb dieses sich durch die Kombination der Sendeantennen insgesamt ergebenden Überwachungsbereichs befindet. Der sich insgesamt ergebende Überwachungsbereich kann beispielsweise durch wenigstens einen Teil eines Fahrzeuginnenraums gebildet sein.

Vorteilhafterweise sind oder mehrere eine Sendeantennen für den auf der Fahrerseite eines betreffenden Fahrzeugs liegenden Überwachungsbereich vorgesehen. Alternativ oder zusätzlich können auch eine oder mehrere Sendeantennen für den auf der Beifahrerseite des betreffenden Fahrzeugs liegenden Überwachungsbereich vorhanden sein. Alternativ oder zusätzlich können überdies beispielsweise eine oder mehrere Sendeantennen für einen im Bereich des Kofferraumes des betreffenden Fahrzeugs liegenden Überwachungsbereich vorgesehen sein.

Bevorzugt umfassen sämtliche Sendeantennen des ersten Transceivers jeweils nur eine einzige Leiterschleife. Werden Leiterschleifen getrennt angesteuert, so kann die Stromrichtung in den Leiterschleifen insbesondere so gewählt sein, dass das aus einem jeweiligen Schleifeninnenbereich austretende Magnetfeld nach außen gerichtet ist und somit eine jeweiliger Außenbereich des Fahrzeugs entsprechend überwacht werden kann.

Im Zusammenhang mit der über die Schaltmittelwahlweise erfolgenden Kombination zumindest der Leiterschleifen der Sendeantenne für den auf der Fahrerseite liegenden Überwachungsbereich und der Sendeantenne für den auf der Beifahrerseite liegenden Überwachungsbereich kann insbesondere auch die Stromrichtung geändert werden, wobei die Richtung für den in der kombinierten Schleife fließenden Strom, insbesondere so gewählt werden kann, dass in diesem Fall der Fahrzeuginnenraum überwacht wird.

Bevorzugt sind hierbei die Leiterschleifen der betreffenden Sendeantennen über die Schaltmittel wieder wahlweise in Reihe schaltbar.

Bevorzugt sind die betreffenden Sendeantennen wahlweise miteinander kombinierbar, um den dadurch insgesamt abgedeckten Bereich des Fahrzeuginnenraums bzw. den Personenraum mittels des ersten Transceivers und der Steuereinrichtung daraufhin zu überwachen, ob sich die Identifikationseinrichtung innerhalb oder außerhalb dieses Bereichs bzw. Raumes befindet.

Bevorzugt ist zumindest eine Sendeantenne des ersten Transceivers ist für eine jeweilige Kommunikation mit dem zweiten Transceiver mit einer entsprechend modulierten Trägerfrequenz beaufschlagbar. Dabei liegt die Trägerfrequenz vorzugsweise im Niederfrequenzbereich, wobei sie z.B. im Bereich von 125 kHz liegen kann.

Die erfindungsgemäße Zugangskontrolleinrichtung ist beispielsweise in Verbindung mit einem schlüssellosen Zugangssystem und/oder einem schlüssellosen Startsystem für Fahrzeuge einsetzbar. Dabei kann die beispielsweise als elektronischer Schlüssel dienende Identifikationseinrichtung mittels insbesondere im Niederfrequenzbereich und beispielsweise im Bereich von 125 kHz arbeitenden Sende- und Empfangskreisen in definierten Bereichen identifiziert werden. Diese Bereiche können außerhalb oder innerhalb des Fahrzeugs oder in anderen definierten Bereichen und beispielsweise auch im Kofferraumbereich von Fahrzeugen liegen.

Man erhält somit beispielsweise ein kostengünstiges Niederfrequenz-System für Fahrzeuge, mit dem die beispielsweise als elektronischer Schlüssel dienende Identifikationseinrichtung mit oder ohne Messung der Stärke des von der Niederfrequenz-Schleifenantenne erzeugten Magnetfeldes geortet werden kann.

Mit dem erfindungsgemäßen Einsatz von durch eine jeweilige Leiterschleife gebildeten Antennen wird im Vergleich zu den bekannten, auf Ferritkern-Antennen basierenden Systemen ein einfacherer und entsprechend kostengünstigerer Aufbau erreicht. Zweckmäßigerweise werden überdies Sendekreise mit nach einer einmal vorgenommenen Kalibrierung festen Leistungspegeln für die jeweiligen Niederfrequenz-Schleifenantennen und ein Empfangskreis mit einer festen Eingangsempfindlichkeit eingesetzt, um die verschiedenen Positionen in den betreffenden Fahrzeugbereichen entsprechend überwachen zu können.

Eine jeweilige Leiterschleife kann beispielsweise entlang wenigstens einer Fahrzeugwand am Rand eines betreffenden Überwachungsbereichs verlaufen. Grundsätzlich ist es auch denkbar, dass eine jeweilige Leiterschleife zumindest eine leitende Fahrzeugwand und hierbei beispielsweise das Fußbrett des betreffenden Fahrzeugs umfasst. Eine jeweilige Leiterschleife kann beispielsweise auch wenigstens ein entlang wenigstens einer der Fahrzeugwände verlaufendes Kabel bzw. elektrische Leitung umfassen.

Das betreffende elektrische Kabel kann beispielsweise über eine Anschlussplatte mit der betreffenden leitenden Fahrzeugwand verbunden sein, um eine entsprechende Ausbreitung des elektrischen Stromes in der Fahrzeugwand zu unterstützen.

Das betreffende elektrische Kabel kann sich beispielsweise in Richtung der Längsachse des Fahrzeugs entlang einer der Innenflächen oberhalb des Fußbretts des Fahrzeugs erstrecken.

Die jeweilige Leiterschleife kann auch den betreffenden Überwachungsbereich umgeben. Dabei kann die jeweilige Leiterschleife z.B. durch leitende Fahrzeugwände gebildet sein, die ringartig miteinander verbunden sind. So können die betreffenden Fahrzeugwände beispielsweise eine Dachwand, ein Fußbrett und zwei allgemein vertikale Pfeiler umfassen, die die Dachwand und das Fußbrett miteinander verbinden.

Wie bereits erwähnt, kann eine jeweilige Leiterschleife beispielsweise auch durch ein elektrisches Kabel gebildet sein. In diesem Fall kann das elektrische Kabel den betreffenden Überwachungsbereich umschließen. Das jeweilige elektrische Kabel kann beispielsweise zumindest im Wesentlichen über seine ganze Länge in den Fahrzeugwänden untergebracht sein.

Wie bereits erwähnt, können mehrere Leiterschleifen vorgesehen sein, durch die beispielsweise ein Fahrzeuginnenraum in mehrere Überwachungsbereiche unterteilt wird.

Eine jeweilige Leiterschleife kann beispielsweise mit wenigstens einem Leistungsverstärker verbunden sein. Dabei sind insbesondere auch solche Ausführungen denkbar, bei denen die beiden Anschlussklemmen einer jeweiligen Leiterschleife mit gegenphasig betriebenen Leistungsverstärkern verbunden sind.

In bestimmten Fällen kann es auch von Vorteil sein, wenn eine jeweilige Schleifenantenne zeitlich nacheinander mit unterschiedlichem Pegel wie zum Beispiel zunehmendem Leistungs- oder Strompegel beaufschlagt wird, um zeitlich aufeinanderfolgend insbesondere unterschiedliche Entfernungen zu erfassen.

Zwischen dem der Steuereinrichtung zuordneten ersten Transceiver und dem der Identifikationseinrichtung zugeordneten zweiten Transceiver können insbesondere Autorisierungssignale ausgetauscht werden, die insbesondere dem Nachweis der Nutzungsberechtigung dienen können. Bei der entsprechenden Prüfung der Nutzungsberechtigung kann beispielsweise so verfahren werden, wie dies in der eingangs genannten DE 198 15 300 A1 beschrieben ist. Die Offenbarung dieser Druckschrift wird hiermit durch Bezugnahme in den Inhalt der vorliegenden Anmeldung miteinbezogen.

Die Erfindung wird im folgenden anhand von Ausführungsbeispielen unter Bezugnahme auf die Zeichnung näher beschrieben; in dieser zeigen:
- Fig. 1: eine vereinfachte schematische Darstellung einer einem Fahrzeug, insbesondere Kraftfahrzeug, zugeordneten Zugangskontrolleinrichtung,
- Fig. 2: eine schematische Darstellung der drei Leiterschleifen der in der Fig. 1 gezeigten Zugangskontrolleinrichtung mit zugeordneten Anschlüssen der betreffenden Treiberstufen,
- Fig. 3: eine schematische Darstellung verschiedener Einheiten der zugehörigen Steuereinrichtung,
- Fig. 4: eine schematische Darstellung von drei Treiberstufen zur getrennten Ansteuerung der Sendeantennen für den auf der Fahrerseite liegenden Überwachungsbereich, den auf der Beifahrerseite liegenden Überwachungsbereich und den Kofferraumbereich, und
- Fig. 5: eine schematische Darstellung von zwei Treiberstufen, von denen die erste zur gemeinsamen Ansteuerung der beiden zusammengeschalteten Sendeantennen für die auf der Fahrerseite und auf der Beifahrerseite liegenden Überwachungsbereiche und die zweite zur Ansteuerung der Sendeantenne für den Kofferraumbereich vorgesehen ist.

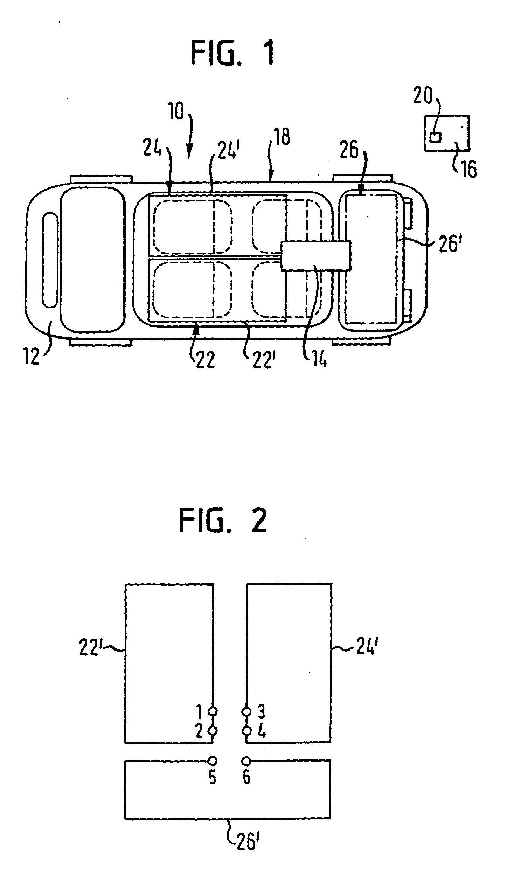

Fig. 1 zeigt in vereinfachter schematischer Darstellung eine rein beispielhafte Ausführungsform einer Zugangskontrolleinrichtung 10, die im vorliegenden Fall für ein Fahrzeug, insbesondere Kraftfahrzeug 12 vorgesehen ist.

Die Zugangskontrolleinrichtung 10 umfasst eine zugangsseitige Steuereinrichtung 14, die im vorliegenden Fall insbesondere durch das Steuergerät des Kraftfahrzeugs 12 gebildet sein kann. Sie umfasst ferner eine benutzerseitige tragbare Identifikationseinrichtung 16 und einen der Steuereinrichtung 14 zugeordneten ersten Transceiver 18 für eine bidirektionale drahtlose Kommunikation mit einem der Identifikationseinrichtung 16 zugeordneten zweiten Transceiver 20.

Beim vorliegenden Ausführungsbeispiel umfasst der der Steuereinrichtung 14 zugeordnete erste Transceiver 18 mehrere, hier drei Sendeantennen 22 - 26, die jeweils eine ein Magnetfeld erzeugende elektrische Leiterschleife 22' - 26' umfassen. Wie anhand der Fig. 1 zu erkennen ist, sind die Leiterschleifen 22' - 26' jeweils zumindest im Wesentlichen geschlossen. Dabei umfasst jede Sendeantenne 22 - 26 jeweils nur eine einzige Leiterschleife 22' - 26'.

Jede der Sendeantennen 22 - 26 ist jeweils für einen vorgebbaren definierten Überwachungsbereich vorgesehen. So ist im vorliegenden Fall die Sendeantenne 22 beispielsweise für einen auf der Fahrerseite des Fahrzeugs 12 liegenden, z.B. äußeren Überwachungsbereich, die Sendeantenne 24 beispielsweise für einen auf der Beifahrerseite liegenden, z.B. äußeren Überwachungsbereich und die Sendeantenne 26 beispielsweise für einen im Bereich des Kofferraumes liegenden, z.B. äußeren Überwachungsbereich vorgesehen.

Ein jeweiliger Überwachungsbereich kann zumindest teilweise insbesondere durch die Größe und den örtlichen Verlauf der betreffenden Leiterschleife 22' - 26', die Ausrichtung des durch die Leiterschleife 22' - 26' erzeugten Magnetfeldes, die Reichweite der Sendeantenne 22 - 26, die Eingangsempfindlichkeit des Empfangsteils des ersten Transceivers 18 und/oder die Richtung des in der Leiterschleife fließenden Stromes definiert sein.

Die Sendeantennen 22 - 26 können jeweils mit einer vorgebbaren definierten Sendeleistung betreibbar sein. Die jeweilige Sendeleistung kann beispielsweise variabel einstellbar sein. Der Empfangsteil des ersten Transceivers 18 kann insbesondere mit einer vorgebbaren definierten Eingangsempfindlichkeit betrieben werden. Auch diese Eingangsempfindlichkeit kann beispielsweise variabel einstellbar sein. Die Reichweite einer jeweiligen Sendeantenne ist also beispielsweise über deren Sendeleistung vorgebbar. Grundsätzlich kann eine entsprechende Einstellung der Reichweite jedoch beispielsweise auch über den Antennenstrom erfolgen.

Fig. 2 zeigt in schematischer Darstellung nochmals die drei Leiterschleifen 22' - 26' der in der Fig. 1 gezeigten Zugangskontrolleinrichtung 10 mit zugeordneten Anschlüssen 1 - 6 der betreffenden Treiber oder Treiberstufen. Wie weiter unten noch näher beschrieben wird, können die Leiterschleifen 22' - 26' getrennt oder zumindest teilweise auch gemeinsam angesteuert werden.

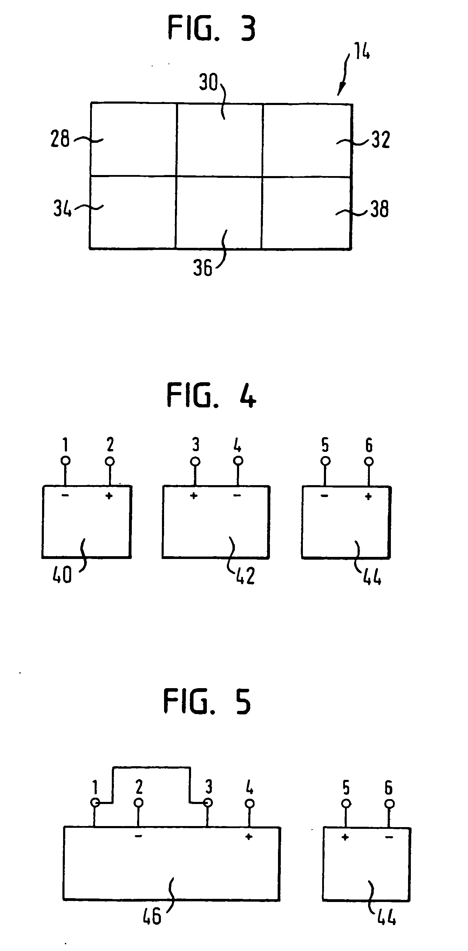

Fig. 3 zeigt in schematischer Darstellung verschiedene Einheiten der zugehörigen, beispielsweise durch das Steuergerät des Kraftfahrzeugs 12 gebildeten Steuereinrichtung 14. Danach kann diese Steuereinrichtung 14 beispielsweise eine Energie- oder Spannungsversorgungseinheit 28, eine Logik-Einheit 30, eine Bus-Einheit 32, eine Antennentreiber-Einheit 34, eine Antennenschalteinheit 36 und eine Empfangseinheit 38 umfassen.

Wie bereits erwähnt, können die drei in der Fig. 2 nochmals wiedergegebenen Leiterschleifen 22' - 26' beispielsweise getrennt angesteuert werden. Dazu können beispielsweise die drei in der Fig. 4 dargestellten, der Antennentreiber-Einheit 34 der Steuereinrichtung 14 (siehe zum Beispiel auch Fig. 3) zugeordneten Treiber oder Treiberstufen 40 - 44 vorgesehen sein. Für eine getrennte Ansteuerung der Leiterschleifen 22' - 26' (vgl. Fig. 2) sind deren Anschlüsse 1 - 6 mit den betreffenden Anschlüssen 1 - 6 der Treiberstufen 40 - 44 zu verbinden, wobei die Verbindungen jeweils zwischen zwei gleichnamigen Antennen- und Stufenanschlüssen herzustellen ist. So ist beispielsweise der Leiterschleifenanschluss 1 mit dem Anschluss 1 der Treiberstufe 40 und der Leiterschleifenanschluss 6 mit dem Anschluss 6 der Treiberstufe 44 zu verbinden. Dabei ist die Treiberstufe 40 der Leiterschleife 22' für den auf der Fahrerseite des Fahrzeugs 12 liegenden Überwachungsbereich, die Treiberstufe 42 der Leiterschleife 24' für den auf der Beifahrerseite liegenden Überwachungsbereich und die Treiberstufe 44 der Leiterschleife 26' für den Kofferraumbereich zugeordnet. Durch eine entsprechende Ansteuerung der Leiterschleifen 22' - 26' über diese Treiberstufen 40 - 44 mit einer entsprechenden Stromrichtung wird im vorliegenden Fall z.B. jeweils überprüft, ob sich die Identifikationseinrichtung 16 in einem betreffenden Überwachungsbereich außerhalb des Fahrzeugs 12 befindet.

Fig. 5 zeigt in schematischer Darstellung zwei Treiber bzw. Treiberstufen 44, 46, wobei die Treiberstufe 44 wieder der Leiterschleife 26' (vgl. Fig. 2) für den Kofferraumbereich zugeordnet ist.

Die Treiberstufe 46 dient im vorliegenden Fall der gemeinsamen Ansteuerung der beiden zusammengeschalteten Leiterschleifen 22', 24' für die auf der Fahrerseite und auf der Beifahrerseite liegenden Überwachungsbereiche. Wie anhand der Figuren 2 und 5 zu erkennen ist, werden hier der Anschluss 1 der Leiterschleife 22' und der Anschluss 3 der Leiterschleife 24' miteinander verbunden, während der Anschluss 2 der Leiterschleife 22' und der Anschluss 4 der Leiterschleife 24' mit den betreffenden Anschlüssen 2 bzw. 4 der den beiden Leiterschleifen 22', 24' gemeinsamen Treiberstufe 46 gekoppelt werden. Eine entsprechende Kombination dieser beiden Leiterschleifen 22', 24' kann über entsprechende Schaltmittel, hier also beispielsweise über die der Steuereinrichtung 14 zugeordnete Antennenschalteinheit 36 erfolgen. Über diese Antennenschalteinheit 36 können die beiden Leiterschleifen 22', 24' also in der in den Fig. 2 und 4 dargestellten Weise beispielsweise in Reihe geschaltet werden. Gleichzeitig kann auch eine Umschaltung der Stromrichtung erfolgen, so dass der betreffende Überwachungsbereich z.B. nicht mehr außerhalb, sondern jetzt innerhalb des Fahrzeugs 12 liegt. Es wird überprüft, ob sich die Identifikationseinrichtung 16 innerhalb des nunmehr durch die beiden Leiterschleifen 22', 24' definierten gemeinsamen Überwachungsbereich befindet. Dieser gemeinsame Überwachungsbereich liegt jetzt zweckmäßigerweise innerhalb des Fahrzeugs 12, was z.B. dadurch erreicht werden kann, dass auch die Stromrichtung umgeschaltet wird. Im vorliegenden Fall wird also geprüft, ob sich die Identifikationseinrichtung 16 innerhalb des Kraftfahrzeugs 12 befindet.

Die Sendeantennen 22 - 26 des ersten Transceivers 18 können für eine jeweilige Kommunikation mit dem zweiten Transceiver 20 insbesondere mit einer entsprechend modulierten Trägerfrequenz beaufschlagbar sein. Diese Trägerfrequenz kann insbesondere im Niederfrequenzbereich und beispielsweise im Bereich von 125 kHz liegen.

Es können also jeweils insbesondere nur aus einer einzigen Schleife bestehende Schleifenantennen eingesetzt werden, um die Position der Identifikationseinrichtung zu überwachen bzw. diese Identifikationseinrichtung zu orten. Die jeweilige Ortung kann mit oder ohne Messung der Stärke des durch die Schleifenantenne abgestrahlten Magnetfeldes erfolgen.

Im vorliegenden Fall sind drei vorzugsweise jeweils durch eine einzige Leiterschleife gebildete Schleifenantennen vorgesehen. Davon ist eine Leiterschleife der Fahrerseite, eine Leiterschleife der Beifahrerseite und eine Leiterschleife dem Kofferraumbereich des Fahrzeugs zugeordnet. Es ist eine beispielsweise durch das Steuergerät des Fahrzeugs gebildete Steuereinrichtung mit einer Treibereinheit für die verschiedenen Treiberstufen vorgesehen, um die insbesondere im Niederfrequenzbereich arbeitenden Antennen mit Energie zu versorgen. Überdies kann die Steuereinrichtung eine Antennenschalteinheit umfassen, um das Antennensystem für eine Unterscheidung zwischen dem Außenbereich und dem Innenbereich des Fahrzeugs Nutzen zu können.

Um beispielsweise feststellen zu können, ob sich die Identifikationseinrichtung seitlich links, seitlich rechts oder im Bereich des Kofferraums außerhalb des Fahrzeugs befindet, können die Leiterschleifen 22' - 26' mit hoher Sendeleistung beaufschlagt und insbesondere entsprechend Fig. 4 geschaltet, d.h. getrennt angesteuert werden. Um unterscheiden zu können, ob sich die Identifikationseinrichtung innerhalb oder außerhalb des Fahrzeugs befindet, können zum Beispiel die beiden Leiterschleifen 22' und 24' in der im Zusammenhang mit der Fig. 5 beschriebenen Weise zusammengeschaltet werden, um von der Identifikationseinrichtung eine Rückmeldung darüber zu erhalten, ob sie sich innerhalb des Fahrzeugs befindet oder nicht. Für die betreffenden Anfragen können die Leiterschleifen also beispielsweise so geschaltet werden, wie dies anhand der Fig. 4 und 5 beschrieben wurde.

Mittels einer jeweiligen Leiterschleife wird bei Bedarf ein magnetisches Feld erzeugt, das im Schleifenbereich die maximale Intensität aufweist. Für eine jeweilige Anfrage, ob sich die Identifikationseinrichtung außerhalb des Fahrzeugs befindet, ist es zweckmäßig, wenn das erzeugte Magnetfeld zumindest überwiegend aus dem Fahrzeug heraus nach außen gerichtet ist. Für eine jeweilige Anfrage, ob sich die Identifikationseinrichtung innerhalb des Fahrzeugs befindet, ist es zweckmäßig, wenn das erzeugte magnetische Feld zumindest überwiegend nach innen gerichtet ist, um eine sich innerhalb des Fahrzeugs befindende Identifikationseinrichtung erfassen zu können. Wie sich aus den Fig. 4 und 5 in Verbindung mit Fig. 2 ergibt, kann hierzu die Stromrichtung in den Leiterschleifen entsprechend umgekehrt werden.

### Bezugszeichenliste

- 10: Zugangskontrolleinrichtung
- 12: Fahrzeug, Kraftfahrzeug
- 14: Steuereinrichtung, Steuergerät
- 16: Identifikationseinrichtung
- 18: erster Transceiver
- 20: zweiter Transceiver
- 22: Sendeantenne
- 22': Leiterschleife
- 24: Sendeantenne
- 24': Leiterschleife
- 26: Sendeantenne
- 26': Leiterschleife
- 28: Spannungsversorgungseinheit
- 30: Logik-Einheit
- 32: Bus-Einheit
- 34: Antennentreiber-Einheit
- 36: Antennenschalteinheit
- 38: Empfangseinheit
- 40: Treiber, Treiberstufe
- 42: Treiber, Treiberstufe
- 44: Treiber, Treiberstufe
- 46: Treiber, Treiberstufe

## Patentansprüche

1. Zugangskontrolleinrichtung (10) für Fahrzeuge, mit einer zugangsseitigen Steuereinrichtung (14), einer benutzerseitigen tragbaren Identifikationseinrichtung (16), einem der Steuereinrichtung (14) zugeordneten ersten Transceiver (18) für eine bidirektionale drahtlose Kommunikation mit einem der Identifikationseinrichtung (16) zugeordneten zweiten Transceiver (20),einer Sendeantenne (22) für einen auf der Fahrerseite eines betreffenden Fahrzeugs (12) liegenden Überwachungsbereich, einer Sendeantenne (24) für einen auf der Beifahrerseite liegenden Überwachungsbereich und einer Sendeantenne (26) für einen im Bereich des Kofferraumes liegenden Überwachungsbereich, wobei der erste Transceiver (13) zumindest eine Sendeantenne (22 - 26) aufweist, die eine ein Magnetfeld erzeugende elektrische Leiterschleife (22' - 26') umfasst
**dadurch gekennzeichnet,**
**dass** Schaltmittel (36) vorgesehen sind, über die zumindest die Leiterschleifen (22', 24') der Sendeantenne (22) für den auf der Fahrerseite liegenden Überwachungsbereich und der Sendeantenne (24) für den auf der Beifahrerseite liegenden Überwachungsbereich wahlweise miteinander geschaltet werden.

2. Zugangskontrolleinrichtung nach Anspruch 1,
**dadurch gekennzeichnet,**
**dass** die Leiterschleife (22', 24', 26') zumindest einer Sendeantenne (22 - 26) des ersten Transceivers (18) zumindest im Wesentlichen geschlossen ist.

3. Zugangskontrolleinrichtung nach Anspruch 1 oder 2,
**dadurch gekennzeichnet,**
**dass** zumindest eine Sendeantenne (22 - 26) des ersten Transceivers (18) nur eine einzige Leiterschleife (22' - 26') umfasst.

4. Zugangskontrolleinrichtung nach einem der vorhergehenden Ansprüche,
**dadurch gekennzeichnet,**
**dass** der vorgebbare definierte Überwachungsbereich zumindest einer Sendeantenne (22 - 26) des ersten Transceivers (18) zumindest teilweise durch die Größe und den örtlichen Verlauf der betreffenden Leiterschleife (22' - 26'), die Ausrichtung des durch die Leiterschleife (22' - 26') erzeugten Magnetfeldes, die Reichweite der Sendeantenne (22 - 26), die Eingangsempfindlichkeit des Empfangsteils des ersten Transceivers (18) und/oder die Richtung des in der Leiterschleife fließenden Stromes definiert ist.

5. Zugangskontrolleinrichtung nach einem der vorhergehenden Ansprüche,
**dadurch gekennzeichnet,**
**dass** zumindest eine Sendeantenne (22 - 26) des ersten Transceivers (18) mit einer vorgebbaren definierten Sendeleistung betreibbar ist.

6. Zugangskontrolleinrichtung nach Anspruch 5,
**dadurch gekennzeichnet,**
**dass** die Sendeleistung variabel einstellbar ist.

7. Zugangskontrolleinrichtung nach einem der vorhergehenden Ansprüche,
**dadurch gekennzeichnet,**
**dass** der Empfangsteil des ersten Tranceivers (18) mit einer vorgebbaren definierten Eingangsempfindlichkeit betreibbar ist.

8. Zugangskontrolleinrichtung nach Anspruch 7,
**dadurch gekennzeichnet,**
**dass** die Eingangsempfindlichkeit variabel einstellbar ist.

9. Zugangskontrolleinrichtung nach einem der vorhergehenden Ansprüche,
**dadurch gekennzeichnet,**
**dass** die Reichweite zumindest einer Sendeantenne (22 - 26) des ersten Transceivers (18) über deren Sendeleistung vorgebbar ist.

10. Zugangskontrolleinrichtung nach einem der vorhergehenden Ansprüche,
**dadurch gekennzeichnet,**
**dass** der erste Transceiver (18) mehrere zumindest teilweise getrennt ansteuerbare Sendeantennen (22 - 26) umfasst.

11. Zugangskontrolleinrichtung nach einem der vorhergehenden Ansprüche,
**dadurch gekennzeichnet,**
**dass** jede Sendeantenne (22 - 26) des ersten Transceivers (18) jeweils über einen Treiber (40 - 44) ansteuerbar ist.

12. Zugangskontrolleinrichtung nach Anspruch 11,
**dadurch gekennzeichnet,**
**dass** der Treiber (40 - 44) der Steuereinrichtung (14) zugeordnet ist.

13. Zugangskontrolleinrichtung nach einem der vorhergehenden Ansprüche,
**dadurch gekennzeichnet,**
**dass** über die Schaltmittel (36) die Richtung des Schleifenstromes umschaltbar ist.

14. Zugangskontrolleinrichtung nach Anspruch 13,
**dadurch gekennzeichnet,**
**dass** die Leiterschleifen (22' , 24') der betreffenden Sendeantennen (22, 24) über die Schaltmittel (36) wahlweise in Reihe schaltbar sind.

15. Zugangskontrolleinrichtung nach Anspruch 13 oder 14,
**dadurch gekennzeichnet,**
**dass** die Leiterschleifen (22', 24') von zumindest zwei Sendeantennen (22, 24) wahlweise miteinander kombinierbar sind, um den **dadurch** insgesamt abgedeckten Bereich mittels des ersten Tranceivers (18) und der Steuereinrichtung (14) daraufhin zu überwachen, ob sich die Identifikationseinrichtung (16) innerhalb oder außerhalb dieses sich durch die Kombination der Sendeantennen (22, 24) insgesamt ergebenden Überwachungsbereichs befindet.

16. Zugangskontrolleinrichtung nach Anspruch 15,
**dadurch gekennzeichnet,**
**dass** der sich insgesamt ergebende Überwachungsbereich durch wenigstens einen Teil eines Fahrzeuginnerraumes gebildet ist.

17. Zugangskontrolleinrichtung nach einem der vorhergehenden Ansprüche,
**dadurch gekennzeichnet,**
**dass** eine oder mehrere Sendeantennen (22) für den auf der Fahrerseite eines betreffenden Fahrzeugs (12) liegenden Überwachungsbereich vorgesehen sind.

18. Zugangskontrolleinrichtung nach einem der vorhergehenden Ansprüche,
**dadurch gekennzeichnet,**
**dass** eine oder mehrere Sendeantennen (24) für den auf der Beifahrerseite eines betreffenden Fahrzeugs (12) liegenden Überwachungsbereich vorgesehen sind.

19. Zugangskontrolleinrichtung nach einem der vorhergehenden Ansprüche,
**dadurch gekennzeichnet,**
**dass** eine oder mehrere Sendeantennen (26) für den im Bereich des Kofferraumes eines betreffenden Fahrzeugs (12) liegenden Überwachungsbereich vorgesehen sind.

20. Zugangskontrolleinrichtung nach einem der vorhergehenden Ansprüche,
**dadurch gekennzeichnet,**
**dass** sämtliche Sendeantennen (22 - 26) des ersten Transceivers (18) jeweils nur eine einzige Leiterschleife umfassen.

21. Zugangskontrolleinrichtung nach einem der vorhergehenden Ansprüche,
**dadurch gekennzeichnet,**
**dass** die Leiterschleifen (22', 24') der betreffenden Sendeantennen (22, 24) über die Schaltmittel (36) wahlweise in Reihe schaltbar sind.

22. Zugangskontrolleinrichtung nach einem der vorhergehenden Ansprüche,
**dadurch gekennzeichnet,**
**dass** die betreffenden Sendeantennen (22, 24) wahlweise miteinander kombinierbar sind, um den dadurch insgesamt abgedeckten Bereich des Fahrzeuginnenraums bzw. den Personenraum mittels des ersten Tranceivers (18) und der Steuereinrichtung (14) daraufhin zu überwachen, ob sich die Identifikationseinrichtung (16) innerhalb oder außerhalb dieses Bereichs bzw. Raumes befindet.

23. Zugangskontrolleinrichtung nach einem der vorhergehenden Ansprüche,
**dadurch gekennzeichnet,**
**dass** zumindest eine Sendeantenne (22 - 26) des ersten Tranceivers (18) für eine jeweilige Kommunikation mit dem zweiten Transceiver (20) mit einer entsprechend modulierten Trägerfrequenz beaufschlagbar ist.

24. Zugangskontrolleinrichtung nach Anspruch 23,
**dadurch gekennzeichnet,**
**dass** die Trägerfrequenz im Niederfrequenzbereich liegt.

25. Zugangskontrolleinrichtung nach Anspruch 23 oder 24,
**dadurch gekennzeichnet,**
**dass** die Trägerfrequenz im Bereich von 125 kHz liegt.

## Claims

1. An access control device (10) for vehicles, comprising a control device (14) at the access side, a portable identification device (16) at the user side, a first transceiver (18) associated with the control device (14) for a bidirectional wireless communication with a second transceiver (20) associated with the identification device (16), a transmitting antenna (22) for a monitored zone disposed on the driver side of a respective vehicle (12), a transmitting antenna (24) for a monitored zone disposed on the passenger side and a transmitting antenna (26) for a monitored zone disposed in the region of the trunk, wherein the first transceiver (18) has at least one transmitting antenna (22-26) which includes an electrical conductor loop (22' - 26') generating a magnetic field,
**characterized in that**
switching means (36) are provided via which at least the conductor loops (22', 24') of the transmitting antenna (22) for the monitored zone disposed on the driver side and of the transmitting antenna (24) for the monitored zone disposed on the passenger side can optionally be connected with one another.

2. An access control device in accordance with claim 1, **characterized in that** the conductor loop (22', 24', 26') of at least one transmitting antenna (22 - 26) of the first transceiver (18) is at least substantially closed.

3. An access control device in accordance with claim 1 or claim 2, **characterized in that** at least one transmitting antenna (22 - 26) of the first transceiver (18) includes only one single conductor loop (22' - 26').

4. An access control device in accordance with any one of the preceding claims, **characterized in that** the pre-determinable, defined monitored zone of at least one transmitting antenna (22 - 26) of the first transceiver (18) is at least partly defined by the size and the local development of the respective conductor loop (22' - 26'), by the orientation of the magnetic field generated by the conductor loop (22' - 26'), by the range of the transmitting antenna (22 - 26), by the input sensitivity of the receiving part of the first transceiver (18) and/or by the direction of the current flowing in the conductor loop.

5. An access control device in accordance with any one of the preceding claims, **characterized in that** at least one transmitting antenna (22 - 26) of the first transceiver (18) is operable at a pre-determinable, defined transmission power.

6. An access control device in accordance with claim 5, **characterized in that** the transmission power is variably adjustable.

7. An access control device in accordance with any one of the preceding claims, **characterized in that** the receiving part of the first transceiver (18) is operable with a pre-determinable, defined input sensitivity.

8. An access control device in accordance with claim 7, **characterized in that** the input sensitivity is variably adjustable.

9. An access control device in accordance with any one of the preceding claims, **characterized in that** the range of at least one transmitting antenna (22 - 26) of the first transceiver (18) is pre-determinable via its transmission power.

10. An access control device in accordance with any one of the preceding claims, **characterized in that** the first transceiver (18) includes a plurality of transmitting antennas (22 - 26) which can be at least partly controlled separately.

11. An access control device in accordance with any one of the preceding claims, **characterized in that** every transmitting antenna (22 - 26) of the first transceiver (18) can each be controlled via a driver (40-44).

12. An access control device in accordance with claim 11, **characterized in that** the driver (40 - 44) is associated with the control device (14).

13. An access control device in accordance with any one of the preceding claims, **characterized in that** the direction of the loop current can be switched via the switching means (36).

14. An access control device in accordance with claim 13, **characterized in that** the conductor loops (22', 24') of the respective transmitting antennas (22, 24) can optionally be connected in series via the switching means (36).

15. An access control device in accordance with claim 13 or claim 14, **characterized in that** the conductor loops (22', 24') of at least two transmitting antennas (22, 24) can be optionally combined with one another in order to monitor the zone thereby covered in total by means of the first transceiver (18) and of the control device (14) as to whether the identification device (16) is located inside or outside this total monitored zone resulting from the combination of the transmitting antennas (22, 24).

16. An access control device in accordance with claim 15, **characterized in that** the monitored zone resulting overall is formed by at least some of an interior vehicle space.

17. An access control device in accordance with any one of the preceding claims, **characterized in that** one or more transmitting antennas (22) are provided for the monitored zone disposed on the driver side of a respective vehicle (12).

18. An access control device in accordance with any one of the preceding claims, **characterized in that** one or more transmitting antennas (24) are provided for the monitored zone disposed on the passenger side of a respective vehicle (12).

19. An access control device in accordance with any one of the preceding claims, **characterized in that** one or more transmitting antennas (26) are provided for the monitored zone disposed in the region of the trunk of a respective vehicle (12).

20. An access control device in accordance with any one of the preceding claims, **characterized in that** all the transmitting antennas (22 - 26) of the first transceiver (18) each include only one single conductor loop.

21. An access control device in accordance with any one of the preceding claims, **characterized in that** the conductor loops (22', 24') of the respective transmitting antennas (22, 24) can optionally be connected in series via the switching means (36).

22. An access control device in accordance with any one of the preceding claims, **characterized in that** the respective transmitting antennas (22, 24) can optionally be combined with one another in order to monitor the zone of the inner vehicle space or of the passenger space thereby covered overall by means of the first transceiver (18) and of the control device (14) as to whether the identification device (16) is located inside or outside this zone or space.

23. An access control device in accordance with any one of the preceding claims, **characterized in that** at least one transmitting antenna (22 - 26) of the first transceiver (18) can be acted on by an appropriately modulated carrier frequency for a respective communication with the second transceiver (20).

24. An access control device in accordance with claim 23, **characterized in that** the carrier frequency lies in the low-frequency range.

25. An access control device in accordance with claim 23 or claim 24, **characterized in that** the carrier frequency lies in the range from 125 kHz.

## Revendications

1. Dispositif de contrôle d'accès (10) pour véhicule, comportant un dispositif de commande (14) côté accès, un dispositif d'identification (16) portable côté utilisateur, un premier émetteur-récepteur (18) associé au dispositif de commande (14) pour une communication bidirectionnelle sans fil avec un second émetteur-récepteur (20) associé au dispositif d'identification (16), une antenne d'émission (22) pour une zone de surveillance située sur le côté conducteur d'un véhicule (12) concerné, une antenne d'émission (24) pour une zone de surveillance située sur le côté passager, et une antenne d'émission (26) pour une zone de surveillance située dans la région du coffre à bagages, le premier émetteur-récepteur (18) comportant au moins une antenne d'émission (22-26) qui comprend une boucle conductrice électrique (22'-26') générant un champ magnétique,
**caractérisé**
**en ce que** sont prévus des moyens de commutation (36) par lesquels sont couplées entre elles au choix au moins les boucles conductrices (22', 24') de l'antenne d'émission (22) pour la zone de surveillance située sur le côté conducteur, et de l'antenne d'émission (24) pour la zone de surveillance située sur le côté passager.

2. Dispositif de contrôle d'accès selon la revendication 1,
**caractérisé**
**en ce que** la boucle conductrice (22', 24', 26') d'au moins une antenne d'émission (22-26) du premier émetteur-récepteur (18) est au moins essentiellement fermée.

3. Dispositif de contrôle d'accès selon la revendication 1 ou 2,
**caractérisé**
**en ce qu'**au moins une antenne d'émission (22-26) du premier émetteur-récepteur (18) ne comprend qu'une seule boucle conductrice (22'-26').

4. Dispositif de contrôle d'accès selon l'une des revendications précédentes,
**caractérisé**
**en ce que** la zone de surveillance définie pouvant être sélectionnée d'au moins une antenne d'émission (22-26) du premier émetteur-récepteur (18) est définie au moins en partie par la dimension et l'allure locale de la boucle conductrice (22'-26') concernée, l'orientation du champ magnétique produit par la boucle conductrice (22'-26'), la portée de l'antenne d'émission (22-26), la sensibilité d'entrée de la partie réceptrice du premier émetteur-récepteur (18) et/ou la direction du courant s'écoulant dans la boucle conductrice.

5. Dispositif de contrôle d'accès selon l'une des revendications précédentes,
**caractérisé**
**en ce qu'**au moins une antenne d'émission (22-26) du premier émetteur-récepteur (18) peut être mise en service avec une puissance d'émission définie qui peut être sélectionnée.

6. Dispositif de contrôle d'accès selon la revendication 5,
**caractérisé**
**en ce que** la puissance d'émission est réglable de manière variable.

7. Dispositif de contrôle d'accès selon l'une des revendications précédentes,
**caractérisé**
**en ce que** la partie réceptrice du premier émetteur-récepteur (18) peut être mise en service avec une sensibilité d'entrée définie qui peut être sélectionnée.

8. Dispositif de contrôle d'accès selon la revendication 7,
**caractérisé**
**en ce que** la sensibilité d'entrée est réglable de manière variable.

9. Dispositif de contrôle d'accès selon l'une des revendications précédentes,
**caractérisé**
**en ce que** la portée d'au moins une antenne d'émission (22-26) du premier émetteur-récepteur (18) peut être prédéfinie par sa puissance d'émission.

10. Dispositif de contrôle d'accès selon l'une des revendications précédentes,
**caractérisé**
**en ce que** le premier émetteur-récepteur (18) comprend plusieurs antennes d'émission (22-26) qui peuvent être commandées au moins en partie séparément.

11. Dispositif de contrôle d'accès selon l'une des revendications précédentes,
**caractérisé**
**en ce que** chaque antenne d'émission (22-26) du premier émetteur-récepteur (18) peut être commandée par un excitateur (40-44).

12. Dispositif de contrôle d'accès selon la revendication 11,
**caractérisé**
**en ce que** l'excitateur (40-44) est associé au dispositif de commande (14).

13. Dispositif de contrôle d'accès selon l'une des revendications précédentes,
**caractérisé**
**en ce que** la direction du courant de boucle peut être commutée à travers les moyens de commutation (36).

14. Dispositif de contrôle d'accès selon la revendication 13,
**caractérisé**
**en ce que** les boucles conductrices (22', 24') des antennes d'émission (22, 24) concernées peuvent être couplées au choix en série à travers les moyens de commutation (36).

15. Dispositif de contrôle d'accès selon la revendication 13 ou 14,
**caractérisé**
**en ce que** les boucles conductrices (22, 24) d'au moins deux antennes d'émission (22, 24) peuvent être combinées au choix entre elles afin de surveiller la zone globale ainsi couverte au moyen du premier émetteur-récepteur (18) et du dispositif de commande (14), pour savoir si le dispositif d'identification (16) se trouve à l'intérieur ou à l'extérieur de cette zone de surveillance résultant au total de la combinaison des antennes d'émission (22, 24).

16. Dispositif de contrôle d'accès selon la revendication 15,
**caractérisé**
**en ce que** la zone de surveillance résultant au total est formée par au moins une partie de l'habitacle d'un véhicule.

17. Dispositif de contrôle d'accès selon l'une des revendications précédentes,
**caractérisé**
**en ce qu'**il est prévu une ou plusieurs antennes d'émission (22) pour la zone de surveillance se situant sur le côté passager d'un véhicule (12) concerné.

18. Dispositif de contrôle d'accès selon l'une des revendications précédentes,
**caractérisé**
**en ce qu'**il est prévu une ou plusieurs antennes d'émission (24) pour la zone de surveillance se situant sur le côté passager d'un véhicule (12) concerné.

19. Dispositif de contrôle d'accès selon l'une des revendications précédentes,
**caractérisé**
**en ce qu'**il est prévu une ou plusieurs antennes d'émission (26) pour la zone de surveillance se trouvant dans la région du coffre à bagages d'un véhicule (12) concerné.

20. Dispositif de contrôle d'accès selon l'une des revendications précédentes,
**caractérisé,**
**en ce que** toutes les antennes d'émission (22-26) du premier émetteur-récepteur (18) ne comprennent chacune qu'une seule boucle conductrice.

21. Dispositif de contrôle d'accès selon l'une des revendications précédentes,
**caractérisé,**
**en ce que** les boucles conductrices (22', 24') des antennes d'émission (22, 24) concernées peuvent être couplées au choix en série à travers les moyens de commutation (36).

22. Dispositif de contrôle d'accès selon l'une des revendications précédentes,
**caractérisé,**
**en ce que** les antennes d'émission (22, 24) concernées peuvent être combinées au choix entre elles pour surveiller la zone globale ainsi couverte de l'habitacle du véhicule au moyen du premier émetteur-récepteur (18) et du dispositif de commande (14), pour savoir si le dispositif d'identification (16) se trouve à l'intérieur ou à l'extérieur de cette zone ou habitacle.

23. Dispositif de contrôle d'accès selon l'une des revendications précédentes,
**caractérisé,**
**en ce qu'**au moins une antenne d'émission (22-26) du premier émetteur-récepteur (18) peut recevoir une fréquence portante modulée en conséquence pour une communication respective avec le second émetteur-récepteur (20).

24. Dispositif de contrôle d'accès selon la revendication 23,
**caractérisé,**
**en ce que** la fréquence portante se trouve dans le domaine des basses fréquences.

25. Dispositif de contrôle d'accès selon la revendication 23 ou 24,
**caractérisé,**
**en ce que** la fréquence portante est de l'ordre de 125 kHz.
